# EUROPEAN PATENT APPLICATION

(11) **EP 4 797 061 A1**
(43) Date of publication of application: **26.08.2026**
(21) Application number: 24880280.3
(22) Date of filing: 18.10.2024
(51) Int. Cl.: G06F 3/048, G06V 40/16, G06N 3/04

(54) **METHOD AND APPARATUS FOR EMOJI USAGE, DEVICE, AND STORAGE MEDIUM**

(30) Priority: 20.10.2023 CN 202311374493
(71) Applicant: Lemon Inc., Grand Cayman, KY1-1205 (KY)
(72) Inventor: OEFVERSTROEM, Thomas, Singapore 018960 (SG); CHEN, Yue, Beijing 100028 (CN); TAN, Siqi, Culver City, California 90230 (US); ZHOU, Jiuyu, Singapore 018960 (SG)
(74) Representative: Grünecker Patent- und Rechtsanwälte PartG mbB
(86) International application number: PCT/SG2024/050669
(87) International publication number: WO 2025/084991

(57) **Abstract**

Embodiments of the disclosure provide a method, an apparatus, a device, and a storage medium for expression usage. In the method, in response to detecting a predetermined trigger operation on a first message in a messaging interface, the terminal device provides a plurality of expression sets respectively corresponding to a plurality of expression types. The plurality of expression sets at least includes a first expression set corresponding to the first expression type. The expression image in the first expression set is generated by using an image generation model based on an image input by the user. In response to detecting a selection of at least one expression image in the plurality of expression sets, the at least one expression image in association with the first message is displayed. The at least one expression image is at least partially superimposed on the first message. In this way, the interestingness of the interaction process between different users is improved.

## Description

This application claims priority to Chinese Patent Application No. 202311374493.0, filed October 20, 2023, and entitled "Method, Apparatus, Device, and Storage Medium for Expression Usage", the entire content of which is incorporated herein by reference.

### FIELD

Example embodiments of the present disclosure generally relate to the field of computers, and in particular, to a method, an apparatus, a device, and a computer-readable storage medium for expression usage.

### BACKGROUND

Nowadays, an increasing number of applications are designed to provide various services to users. Many applications may support message interaction between the users. Messages may include various types of messages, such as videos, images, audios, texts, or the like. In a process of message interaction with other users, a user may send an expression image to improve the interestingness of interaction. The user expects to interact with various expression images to further improve the information amount and the interaction efficiency in the process of message interaction.

### SUMMARY

In a first aspect of the present disclosure, a method for expression usage is provided. The method includes: providing, in response to detecting a predetermined trigger operation on a first message in a messaging interface, a plurality of expression sets respectively corresponding to a plurality of expression types, the plurality of expression sets including at least a first expression set corresponding to a first expression type, and an expression image in the first expression set being generated by using an image generation model based on an image input by a user; and displaying, in response to detecting a selection of at least one expression image in the plurality of expression sets, the at least one expression image in association with the first message, at least one expression image being at least partially superimposed on the first message.

In a second aspect of the present disclosure, an apparatus for expression usage is provided. The apparatus includes: an expression providing module configured to provide, in response to detecting a predetermined trigger operation on a first message in a messaging interface, a plurality of expression sets respectively corresponding to a plurality of expression types, the plurality of expression sets including at least a first expression set corresponding to a first expression type, and an expression image in the first expression set being generated by using an image generation model based on an image input by a user; and an association display module configured to display, in response to detecting a selection of at least one expression image in the plurality of expression sets, the at least one expression image in association with the first message, the at least one expression image being at least partially superimposed on the first message.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium has a computer program stored thereon, and the computer program is executable by a processor to implement the method of the first aspect.

According to a fifth aspect of the present disclosure, a computer program product is provided. The computer program product includes a computer program. The computer program, when executed by a processor, implements the method according to the first aspect of the present disclosure.

It should be understood that the content described in this content section is not intended to limit the key features or major features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, in which:
FIG. 1 illustrates a schematic diagram of an example environment in which embodiments of the present disclosure may be implemented;
FIG. 2 illustrates a schematic diagram of an example architecture for expression creation according to some embodiments of the present disclosure;
FIG. 3 illustrates an example user interface according to some embodiments of the present disclosure;
FIGS. 4A and 4B illustrate example user interfaces according to some embodiments of the present disclosure;
FIGS. 5 to 17 illustrate example user interfaces according to some embodiments of the present disclosure;
FIG. 18 illustrates a flowchart of a method for expression usage according to some embodiments of the present disclosure;
FIG. 19 illustrates a block diagram of an apparatus for expression usage according to some embodiments of the present disclosure; and
FIG. 20 illustrates a block diagram of a device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as being limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

In the description of the embodiments of the present disclosure, the terms "including" and the like should be understood as an open-ended inclusion, i.e., "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

Herein, unless explicitly stated, "in response to A" performing one step does not imply that this step is performed immediately after "A", but one or more intermediate steps may be included.

It may be understood that data involved in the technical solution (including but not limited to the data itself, obtaining or use of the data) should follow the requirements of the corresponding laws and regulations and related provisions.

It may be understood that, before the technical solutions disclosed in the embodiments of the present disclosure are used, the type, the usage scope, the usage scenario and the like of personal information related to the present disclosure should be notified to the user in an appropriate manner according to the relevant laws and regulations, and the authorization from the user should be obtained.

For example, in response to receiving an active request from a user, prompt information is sent to the user to explicitly prompt the user that the requested operation will need to obtain and use personal information of the user, so that the user may autonomously select whether to provide personal information to software or hardware, such as an electronic device, an application program, a server, or a storage medium, executing the operation of the technical solution of the present disclosure according to the prompt information.

As an optional but non-limiting implementation, in response to receiving an active request from the user, a manner of sending prompt information to the user may be, for example, in the form of a pop-up window, and the prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process are merely illustrative, and do not constitute a limitation on implementations of the present disclosure, and other manners of meeting related laws and regulations may also be applied to implementations of the present disclosure.

In the field of information interaction, an expression may express an intention of a user in a more vivid manner compared to a pure text. Thus, an increasing number of users tend to use expressions for communication. With the further development of image and artificial intelligence (AI) technologies, expressions based on AI technology are gradually coming into people's view. In other words, during the information interaction, the user may use a traditional expression or may use an AI based expression. In this case, the presentation and interaction logic of the user interface will become more complex and diverse. Therefore, in the case of supporting both the traditional expression and the AI based expression, how to coordinate the interaction logic for presenting and processing these two types of expressions is an urgent issue to be solved.

Embodiments of the present disclosure provide a method, an apparatus, a device and a storage medium for expression usage. In this solution, in response to detecting a predetermined trigger operation on a first message in a messaging interface, a terminal device provides a plurality of expression sets corresponding to a plurality of expression types. The plurality of expression sets includes at least a first expression set corresponding to a first expression type, and an expression image in the first expression set is generated by using an image generation model based on an image input by the user. Further, in response to detecting a selection of at least one expression image in the plurality of expression sets, the terminal device displays the at least one expression image in association with the first message, and the at least one expression image is at least partially superimposed on the first message. In this way, the interestingness of the interaction process between different users is improved.

The term "work" of the present disclosure refers to any type of media work including, but not limited to, an audio file, a video file, a picture file, a text file, or the like. Specifically, the work may be, for example, a short video, a music, a picture, a picture compilation, a multimedia clip, audio data, or the like. The present disclosure is not limited in this regard.

The term "expression image" of the present disclosure is also referred to as an expression, an expression sticker, an expression icon, or the like. In the present disclosure, the expression image generated by means of a model is also referred to as an artificial expression image or abbreviated as an AI expression, to distinguish from an expression that is not generated by a model.

The term "expression library" of the present disclosure is also referred to as an expression panel or a sticker panel in the messaging interface. An overall entry of the expression library is generally provided in the messaging interface, and all the expression sets associated with the user may be viewed through the overall entry. In some embodiments, each expression set in the expression library has a corresponding navigation label, and the expression image in the corresponding expression set may be viewed by selecting different navigation tags.

### Example Environment

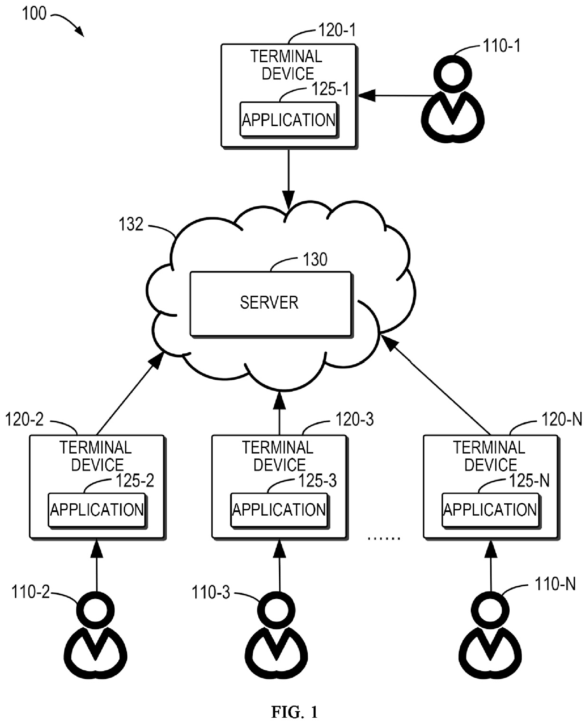

FIG. 1 illustrates a schematic diagram of an example environment 100 in which embodiments of the present disclosure may be implemented. The environment 100 includes one or more users 110-1, 110-2, 110-3, ..., 110-N, who may send or receive messages through their respective associated terminal devices 120-1, 120-2, 120-3, ..., 120-N. For ease of discussion, users 110-1, 110-2, 110-3, ..., 110-N may be collectively or individually referred to as a user 110, and the terminal devices 120-1, 120-2, 120-3, ..., 120-N may be collectively or individually referred to as a terminal device 120. In some scenarios, the user 110 may post and comment on the work in a target platform through an associated terminal device 120. In some scenarios, user 110 is also referred to as a poster of a work.

An application 125 supporting message interaction may be installed in the terminal device 120 (that is, an application 125-1 is installed in the terminal device 120-1, an application 125-2 is installed in the terminal device 120-2, an application 125-3 is installed in the terminal device 120-3, ... and an application 125-N is installed in the terminal device 120-N). It should be noted that the applications 125 installed in different terminal devices 120 may be the same application or different applications (for example, in different versions). The application 125 may be any suitable application having a messaging function, for example, a dedicated chat application, a social application, a content sharing application, an office support application, or the like.

In the environment 100 of FIG. 1, if the application 125 is in an active state, the terminal device 120 may present a user interface of the application 125. The user interface may include various types of interfaces that may be provided by the application 125, such as a user interface that supports message interaction, a user interface that supports content browsing, a messaging interface, and the like. Via different user interfaces, the application 125 may provide different content to the user 110. By appropriate manners, such as clicking or selecting any appropriate element in the user interface, the application 125 may also provide the user 110 with selection and switching of presentation of the associated content.

In some embodiments, different terminal devices 120 may also communicate with a server 130 through a network 132, to implement the supply of the message interaction service. The server 130 may provide functions such as management, configuration, and maintenance of the application 125.

The terminal device 120 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a television receiver, a radio broadcast receiver, an electronic book device, a gaming device, or any combination of the foregoing, including accessories and peripherals of these devices, or any combination thereof. In some embodiments, the terminal device 120 may also support any type of interface for a user (such as a "wearable" circuit, etc.). The server 130 may be various types of computing systems/servers capable of providing computing capability, including, but not limited to, a mainframe, an edge computing node, a computing device in a cloud environment, or the like.

It should be understood that the structures and functions of various elements in the environment 100 are described for illustrative purposes only and do not imply any limitation to the scope of the present disclosure.

Various example implementations of the present disclosure will be described in detail below.

### Example Framework

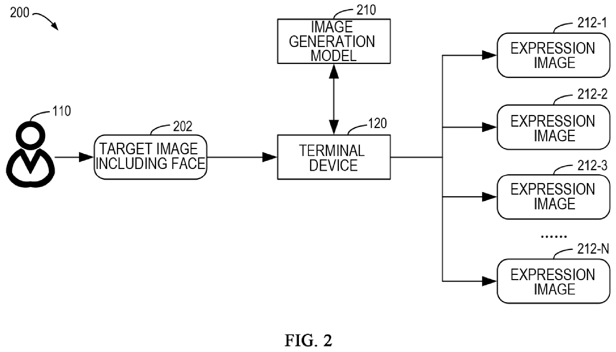

FIG. 2 illustrates a schematic diagram of an example architecture 200 for expression creation according to some embodiments of the present disclosure. As shown in FIG. 2, the architecture 200 relates to a terminal device 120 and an image generation model 210.

The image generation model 210 may run locally on the terminal device 120 or deployed remotely, for example, in a server (for example, the server 130), in a cloud environment, or the like. When running locally, the terminal device 120 may directly provide the input of the model to the image generation model 210 installed locally, and obtain the model output generated by the image generation model 210. In the case of remote operation, the terminal device 120 provides data to other electronic devices through a communication connection between the terminal device 120 and other electronic devices. The other electronic devices determine the model input based on the acquired data and provide this model input to the image generation model 210. After obtaining the model output of the image generation model 210, the other electronic devices provide the model output to the terminal device 120 through the communication connection between the other electronic devices and the terminal device 120, so that the terminal device 120 obtains the model output. For ease of description, an example in which the image generation model 210 is installed locally on the terminal device 120 (that is, the terminal device 120 may directly provide the model input to the image generation model 210 and may directly obtain the model output from the image generation model 210) may be taken as illustrative description in the following.

In a case that the application 125 is in an active state, the terminal device 120 may present a user interface provided by the application 12 that supports message interaction5. In an embodiment of the present disclosure, the terminal device 120 detects an expression creation operation corresponding to a first type in the user interface supporting message interaction. The first type herein may be, for example, a type corresponding to an AI expression. The user interface supporting message interaction may include, for example, a first expression creation entry for creating an expression corresponding to the first type. The terminal device 120 may determine, in response to detecting a trigger operation by the user 110 on the first expression creation entry, that the expression creation operation corresponding to the first type is detected. It may be understood that, in some embodiments, a plurality of creation entries corresponding to various types of expressions may be provided in the user interface supporting message interaction, the plurality of creation entries include a first expression creation entry and creation entries corresponding to other types of expressions, and the present disclosure does not limit the number of creation entries included in the user interface and the types of expressions corresponding to other creation entries.

In response to detecting the expression creation operation, the terminal device 120 obtains a target image 202 input by the user 110 and including a face (also abbreviated as a target image 202). The target image 202 is an image including at least a face of a target object, and the target object herein may be an object, such as a person, an animal or the like, having various facial expressions. For example, the terminal device 120 may capture the target image 202 input by the user 110 through an image acquisition device (for example, a camera). For example, the terminal device 120 may further obtain a target image 202 selected by the user 110 and stored locally on the terminal device 120.

The terminal device 120 may, in turn, generate at least one expression image 212 of the first type (e.g., which may include expression images 212-1, 212-2, 212-3, ..., 212-N, where N is a positive integer, the expression images 212-1, 212-2, 212-3, ..., 212-N may be collectively or individually referred to as an expression image 212) by using the image generation model 210 based on the target image 202 and a prompt input. The prompt input indicates at least one expression pattern to be generated. Different expression patterns may convey different facial expressions, emotions, such as smile, laugh, sadness, crying, etc.

Herein, the image generation model 210 may be any suitable machine learning model with image generation capability. For example, the image generation model 210 may be based on a diffusion model, such as a three-dimensional animation diffusion model.

The quality of the image generated by the image generation model 210 may be affected by model training data and the currently input target image 202. In some embodiments, in order to ensure the quality of the generated expression image 212 as much as possible, the terminal device 120 may also use a series of face detection models (for example, which may include an eye detection model, an angle detection model, an expression detection model, etc.) to detect the target image 202. The terminal device 120 may provide the target image 202 to the image generation model 210 only after the target image 202 has passed through a series of face detection models. In some embodiments, the series of face detection models may also be used to direct the user 110 to provide a target image 202 meeting requirements. For example, if the target image 202 cannot pass through the detection, the terminal device 120 may present, based on a detection result output by the series of face detection models, prompt information that prompts the user 110 how to obtain the target image 202 meeting the requirements.

In some embodiments, the specified expression pattern for generating the expression image 212 may include at least one predefined expression pattern, at least one expression pattern indicated by the user, and/or at least one expression pattern determined based on a trend event, or the like. The predefined expression pattern herein may be, for example, a pre-obtained default expression pattern, that is, an expression pattern output by the model by default during the expression creation. The expression pattern indicated by the user may be, for example, a user optional or customizable expression pattern. For example, before creating the expression image, a list of optional expression patterns may be provided to the user to enable the user to select one or more expression patterns to be created therefrom. In some implementations, the user may be allowed to define, by natural language input or by providing a reference image, an expression pattern to be generated. Here, the expression pattern determined based on the trend event may be at least one expression pattern matching the trend event and determined by the terminal device 120 through its analysis of the trend event. For example, if the current time corresponds to a certain festival, the terminal device 120 may determine at least one expression pattern matching the festival, and generate the expression image automatically by using the determined expression pattern when the user needs to create an expression.

The prompt input is configured to guide at least the image generation model 210 to generate the indicated expression pattern. In some embodiments, the prompt input and the expression pattern may be in a one-to-one, one-to-many, or many-to-one relationship. That is, one expression pattern may correspond to one prompt input, one prompt input may correspond to multiple expression patterns, or one expression pattern corresponds to multiple prompt inputs. For example, Table 1 illustrates examples of correspondences between expression patterns and prompt inputs.

**Table 1**

| # | Expression Pattern | Prompt Input |
|---|---|---|
| 1 | Happy/Joyful/Finding something funny | Smile, Laugh, Shining eyes, Raised cheeks |
| 2 | Loving/Liking | Warm smile, Gentle gaze |
| 3 | Sad/Sorrowful | Frowning, Crying, Drooping shoulders, Downward-turned mouth |
| 4 | Scared/Fearful | Wide-open eyes, Raised eyebrows, Open mouth |
| 5 | Confused | Confused expression, Tilted head, Furrowed brows |
| 6 | Angry | Furrowed brows, Clenched fists, Glaring eyes |
| 7 | Surprised | Wide-open eyes, Dropped jaw |
| 8 | Enthusiastic | Bright eyes, Radiant smile |
| 9 | Bored | Dazed or vacant expression, Half-closed or drooping eyelids |
| 10 | Doubtful | Raised eyebrows, Furrowed brows, Confused expression |
| ... | ... | ... |

As shown in Table 1, the terminal device 120 may determine a corresponding prompt input based on the expression pattern, or determine a corresponding expression pattern based on the prompt input. For example, the terminal device 120 may obtain at least one expression pattern to be generated corresponding to the at least one expression image 212, and determine at least one prompt input corresponding to the at least one expression pattern based on the Table 1.

The terminal device 120 may provide the target image 202 input by the user and the constructed prompt input to the image generation model 210 together, so that the image generation model 210 generates at least one expression image 212 based on the prompt input and the target image 202. Herein, the expression image may also be referred to as an expression, an emoticon, an expression sticker, or the like. Herein, the expression image 212 generated by means of the model is also referred to as an AI expression image or abbreviated as an AI expression, to distinguish an expression that is not generated by the model. The number of expression images 212 generated may, for example, be equivalent to the number indicated by the prompt input. In some embodiments, the expression image 212 may be a static expression image or a dynamic expression image (i.e., a dynamic image).

It should be noted that, in a case that a certain expression pattern corresponds to a plurality of prompt inputs, the terminal device 120 may, for example, provide the plurality of prompt inputs as the prompt input corresponding to the expression pattern to the image generation model 210, to obtain the plurality of expression images 212 corresponding to the plurality of prompt inputs that are generated by the image generation model 210. The plurality of expression images 212, although corresponding to the same expression pattern, are different images. That is, the image generation model 210 may generate a plurality of different expression images 212 corresponding to one expression pattern based on the plurality of prompt inputs.

Each expression image 212 includes a change object corresponding to the target object, and a face of the change object has a corresponding expression pattern. The change object refers to that the target image is converted into a specific image or appearance style, for example, the change object included in the expression image 212 may be designed according to a specific drawing style such as cartoon character, sketch and oil painting.

The terminal device 120 may store the obtained at least one expression image 212 in the expression library associated with the user 110 for being used in message interaction. The expression library may be, for example, an expression library of an account corresponding to the user 110 in the application 125. After the user 110 logs in to the corresponding account, the user 110 may select a desired expression image from the expression library to perform message interaction in the process of message interaction. In some embodiments, the terminal device 120 may further review the obtained at least one expression image 212 to determine whether the at least one expression image 212 includes an inappropriate expression image (for example, whether the at least one expression image 212 includes an expression image that is excessively strange or distorted). The terminal device 120 may then store an expression image that has passed the review. Alternatively or additionally, in some embodiments, the generated at least one expression image 212 may also be reviewed by the image generation model 210 itself, and only the expression image 212 that has passed the review is provided to the terminal device 120.

In some embodiments, if the image generation model 210 is installed on other electronic devices, after the image generation model 210 generates the at least one expression image 212, the other electronic devices (or the image generation model 210) may immediately delete the obtained target image 202 to ensure the information security of the user 110.

In this way, by means of the image generation capability of the model, the user may complete the customization of the expression image by simply providing the target image, to obtain the user's own unique expression image. The image creation process is simple, different expression images may be provided for different users, and the message interaction process is richer.

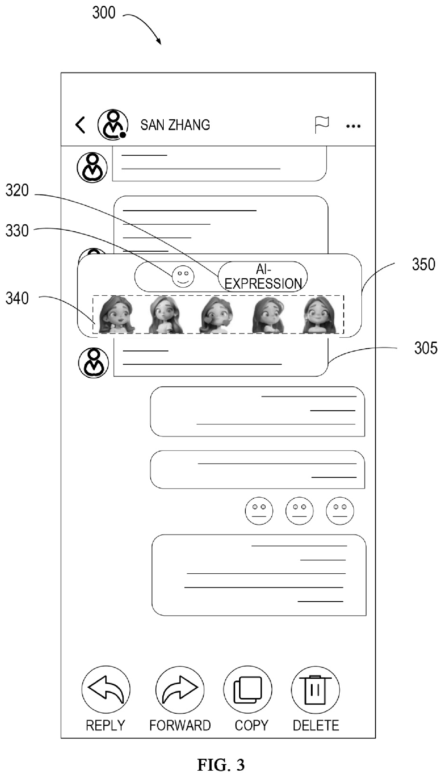

Example embodiments for expression creation are described below with continued reference to example interfaces/example pages shown in FIGS. 3A to 16C.

### Example Process

For better understanding of various embodiments of the present disclosure, example user interfaces 300 to 1700 shown in FIGS. 3 to 17 are referenced to in the example embodiments below. It should be understood that the user interfaces shown in FIGS. 3 to 17 are merely examples, and various designs may actually exist. For example, individual graphical elements and/or controls in the user interface may have different arrangements and different visual representations, one or more of the elements and/or controls may be omitted or replaced, and one or more other elements and/or controls may also be present. In addition, any suitable content may be included in the user interface. The scope of the present disclosure is not limited in this regard.

Further, the user may implement switching and jumping of user interfaces by activating a control/entry in respective user interfaces. It should be understood that the logic for switching and jumping may be arbitrarily set. For example, in an example embodiment, the user jumps from a first user interface to a second user interface by activating a control. In other embodiments, the user may jump from the first user interface to a third user interface by activating another control. The present disclosure is not limited in this regard. It should also be understood that although a plurality of user interfaces is described in one particular embodiment, any user interface described in the present disclosure may be implemented and protected independently as a separate embodiment.

In example embodiments of the present disclosure, the example user interfaces 300 to 1700 may be implemented at the terminal device 120. For ease of discussion, the example user interfaces 300 to 1700 will be described with reference to the environment 100 of FIG. 1.

In operation, the terminal device 120 detects a predetermined trigger operation on the first message in the messaging interface. If the predetermined trigger operation on the first message in the messaging interface is detected, the terminal device 120 provides a plurality of expression sets corresponding to the plurality of expression types.

In the present disclosure, the messaging interface includes at least a message area and an input area, wherein the message area refers to an area for displaying an interactive message and a system message between users, and the input area includes various controls for inputting a message, including an input box, an entry of an expression library, or the like.

In some embodiments, the plurality of expression sets includes at least a first expression set corresponding to a first expression type. An expression image in the first expression set is generated by using an image generation model based on the image input by the user. The generation of the first expression set in response to generating the expression image in the first expression set may refer to the example embodiment discussed above in connection with FIG. 2.

Referring to the example user interface 300 shown in FIG. 3. The example user interface 300 is a messaging interface and includes a first message 305. If a predetermined trigger operation on the first message 305 is detected, the terminal device 120 provides a plurality of expression sets corresponding to the plurality of expression types. In the example embodiment of FIG. 3, the plurality of expression sets includes a first expression set and a second expression set, and an expression image 340 in the first expression set is generated by using an image generation model. In view of this, the expression image 340 in the first expression set may also be an AI-expression.

In some embodiments, the terminal device 120 detects a selection of at least one expression image in the plurality of expression sets. If the selection of the at least one expression image in the plurality of expression sets is detected, the terminal device 120 displays the at least one expression image in association with the first message. For example, the selected at least one expression image is at least partially superimposed on the first message. Herein, a display area of messages is also referred to as a message bubble.

It should be understood that the selection operation includes, but is not limited to, single point contact, multi-touch, sliding, etc., within a corresponding area. It should be understood that this is merely illustrative and not intended to limit the aspects of the present disclosure. In other embodiments, the selection operation may also be other gesture operation, stylus operation, or other interaction operation. The present disclosure is not limited in this regard.

By superimposing the expression image on the corresponding message, a visual presentation process of message interaction is richer.

In some embodiments, the selected expression image is superimposed at the lower middle part of a display area of the first message. In other embodiments, the selected expression image is superimposed at the lower right corner of the display area of the first message. It should be understood that the position where the expression image is superimposed and displayed is not limited in the present disclosure.

Additionally, in some embodiments, the selected at least one expression image in the plurality of expression sets includes at least one expression image from the first expression set and at least one expression image from the second expression set of the plurality of expression sets.

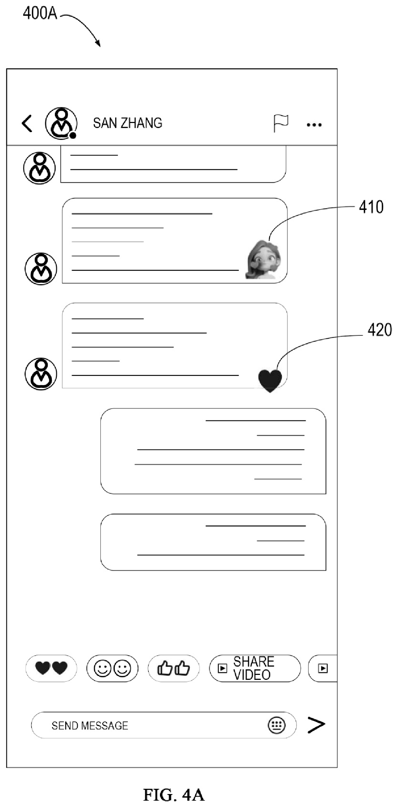

Referring to the example user interface 400A shown in FIG. 4A, as shown in FIG. 4A, the expression image 410 in the first expression set is superimposed on a corresponding message. Alternatively, the expression image 420 in the second expression set may also be superimposed on the corresponding message.

In some embodiments, interaction processes of the first expression set and the second expression set may be independent of each other. Specifically, for the same message, the user may select a plurality of expression images, including a first expression image from the first expression set and a second expression image from the second expression set.

Additionally, in some embodiments, a quantity of expression images selected by the user may be constrained. Specifically, the user may only select one expression image in the first expression set.

Further referring to FIG. 4A, in the example embodiment of FIG. 4A, a display size of the expression image 410 is greater than a display size of the expression 420. This is because the AI generated expression image contains richer information and may be designed to be larger in size. In this way, the visual display of the superimposed display is further enhanced.

In some embodiments, a plurality of expression images in the plurality of expression sets may be selected. For example, the user selects the displayed expression image through multiple clicks. In this way, the user may superimpose the same or different expression images on the plurality of messages or superimpose different expression images for the same message.

In some embodiments, a predetermined trigger operation includes at least a long-press operation. In the example embodiment of FIG. 3, the user may trigger the presentation of the plurality of expression sets by long pressing the first message 305. In other embodiments, the predetermined trigger operation may further include: a hover of a mouse, a click of a right key of a mouse, a double-click operation of a left key of a mouse, or the like. The present disclosure is not limited in the specific implementation of the predetermined trigger operation.

As discussed below, according to some embodiments of the present disclosure, the interface corresponding to the plurality of expression sets may be presented to the user in a more friendly manner, so that the user may quickly select the corresponding expression image.

In some embodiments, the terminal device 120 detects a predetermined operation for the first message. If a predetermined operation for the first message is detected, the terminal device 120 superimposes and displays an expression bar on a message area of the messaging interface. The expression bar includes at least a first navigation label corresponding to the first expression set and a second navigation label corresponding to the second expression set, and a navigation label in the expression bar is selectable to enable a corresponding expression set to be displayed in the expression bar. In some embodiments, the first navigation label is selected by default when the expression bar is displayed such that the first expression set is displayed in the expression bar.

Referring to the example user interface 300 shown in FIG. 3, in the example embodiment of FIG. 3, after the terminal device 120 detects a predetermined operation for the first message 305, the terminal device 120 superimposes and displays an expression bar 350 on a message area of the messaging interface. The expression bar includes at least a first navigation label 320 corresponding to the first expression set and a second navigation label 330 corresponding to the second expression set, and navigation labels in the expression bar 350 are selectable, respectively, such that a corresponding expression set is displayed in the expression bar 350. As shown in FIG. 3, when the expression bar 350 is displayed, the first navigation label 320 is selected by default, so that the first expression set is displayed in the expression bar 350.

In some embodiments, in addition to the first navigation label, ranking of the remaining navigation labels may be determined based on at least one of the following: a latest navigation label ranking setting, historical usage information of an expression, or the like.

As discussed below, in accordance with some embodiments of the present disclosure, the presentation process of the plurality of expression images may be further optimized when the same message is superimposed with multiple expression images.

In some embodiments, if a selection of a plurality of expression images in the plurality of expression sets is detected, the terminal device 120 displays an expression container in association with the first message. The expression container includes respective thumbnails of the plurality of expression images, and the expression container is at least partially superimposed on a display area of the first message.

In some embodiments, the expression container is superimposed and presented at the lower middle part of the display area of the first message. In other embodiments, the expression container is superimposed and presented at the lower right corner of the display area of the first message. It should be understood that the present disclosure does not limit the presentation position of the expression container.

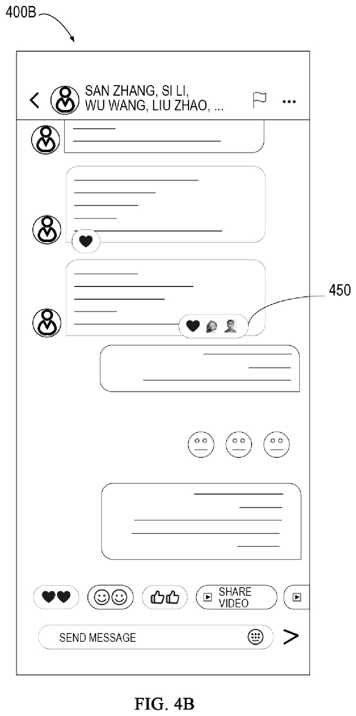

Referring to the example user interface 400B shown in FIG. 4B, in the example embodiment of FIG. 4B, the terminal device 120 displays an expression container 450 in association with the first message. The expression container 450 includes respective thumbnails of the plurality of expression images, and the expression container is at least partially superimposed on the display area of the first message.

Additionally, in some embodiments, the expression container is associated with the first expression set. In other words, only the expression image in the first expression set is added to the expression container.

In some embodiments, in a case that the first message has at least another expression image that has been displayed in association, if the terminal device 120 detects a selection of at least one expression image in the plurality of expression sets, the terminal device 120 displays the expression container in association with the first message. The expression container includes at least another expression image and a respective thumbnail of the at least one expression image, and the expression container is at least partially superimposed on the display area of the first message.

As discussed below, according to some embodiments of the present disclosure, the terminal device 120 may provide an expression viewing panel to enable the user to know which user has posted the superimposed expression.

In some embodiments, if the selection of the expression image displayed in association with the first message is detected, the terminal device 120 presents an expression viewing panel in the messaging interface. The expression viewing panel includes the expression image displayed in association with the first message and a sent user of the expression image.

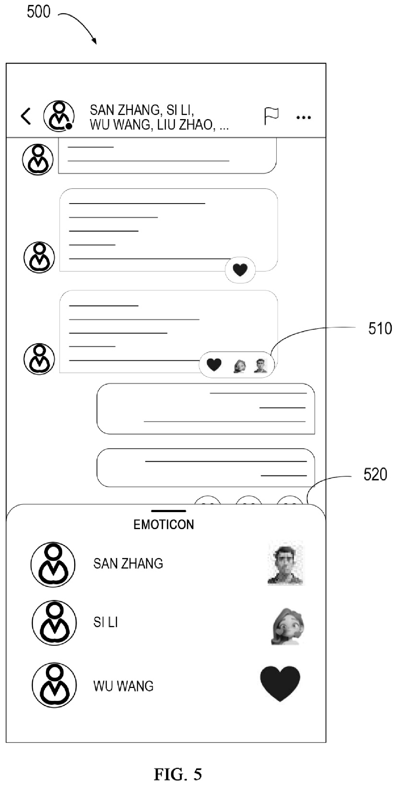

Referring to the example user interface 500 shown in FIG. 5, in the example embodiment of FIG. 5, the terminal device 120 detects a selection of an expression image displayed in association with the first message, for example, a selection of an expression container 510 or any expression in the expression container 510, and the terminal device 120 presents an expression viewing panel 520 in the messaging interface. As shown in FIG. 5, the expression viewing panel 520 includes an expression image displayed in association with the first message and a sent user of the expression image.

Additionally, in some embodiments, the expression viewing panel includes an entry of a user detail page of the sent user of the expression image.

Further referring to the example user interface 500 shown in FIG. 5, in the example embodiment of FIG. 5, the expression viewing panel 520 includes an expression image displayed in association with the first message and a sent user of the expression image. If an activation operation for the presented expression image and/or the area associated with the sent user of the expression image is detected, the user detail page of the sent user, also referred to as a personal homepage or a user profile page, is jumped to display user related information.

In some embodiments, presentation of an expression preview panel may be canceled. Specifically, in response to a downward sliding operation of the user in an area where the expression viewing panel 520 is located, the terminal device 120 may cancel the display of the expression viewing panel 520.

As discussed below, according to some embodiments of the present disclosure, the terminal device 120 may preferentially recommend an expression image in the first expression set to the user through the expression preview panel.

In some embodiments, if it is detected that the messaging interface is presented, the terminal device 120 presents the expression preview panel in the message area of the messaging interface. The expression preview panel includes one or more expression images in the first expression set.

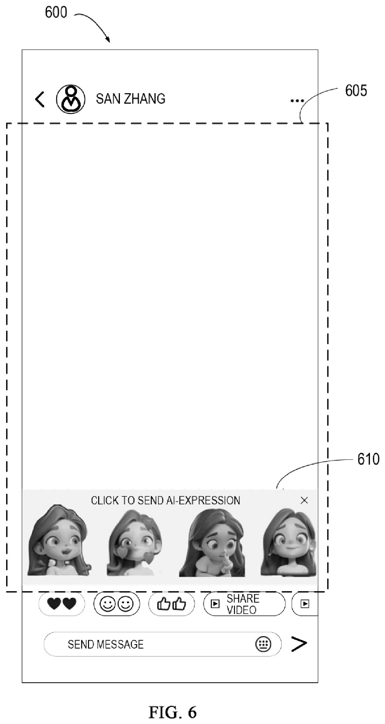

Referring to the example user interface 600 shown in FIG. 6, in the example embodiment of FIG. 6, an initial messaging interface is presented. Further, the terminal device 120 presents an expression preview panel 610 in a message area 605 of the messaging interface. The expression preview panel 610 includes one or more expression images in the first expression set.

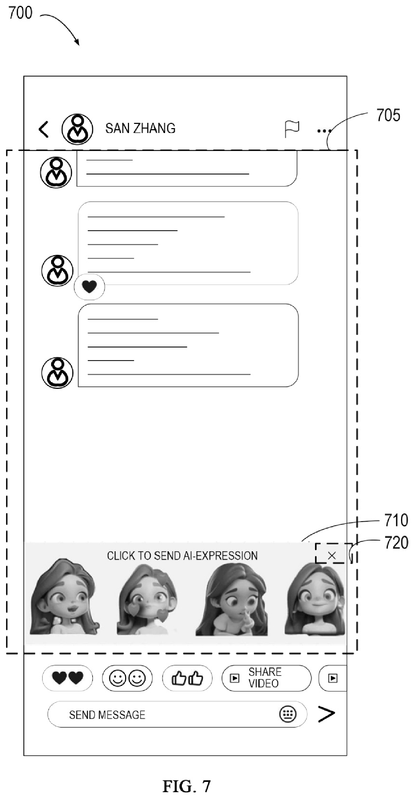

Referring to the example user interface 700 shown in FIG. 7, in the example embodiment of FIG. 7, a messaging interface including historical messages is presented. Further, the terminal device 120 presents an expression preview panel 710 in a message area 705 of the messaging interface. The expression preview panel 710 includes one or more expression images in the first expression set.

According to some embodiments of the present disclosure, in order to avoid excessive disturbance to the user, the number of times of presenting the expression preview panel may be limited. For example, after the first expression set is created, the expression preview panel displays only once to the user.

As discussed below, in accordance with some embodiments of the present disclosure, the presentation of the preview panel may be canceled. Specifically, in some embodiments, if the selection of at least one expression image in the expression preview panel is detected, the terminal device 120 cancels presentation of the expression preview panel. Alternatively, in some embodiments, if a closing operation for the expression preview panel is detected, the terminal device 120 cancels the presentation of the expression preview panel.

Referring to the example user interface 700 shown in FIG. 7, if the user triggers a closing operation for the expression preview panel 710 in the user interface 700, for example, clicking a closing control 720, the terminal device 120 cancels presentation of the expression preview panel 710.

Alternatively, if the user selects any expression image in the expression preview panel 710 in the user interface 700, the terminal device 120 cancels presentation of the expression preview panel 710.

Additionally, in some embodiments, in response to presentation of the expression preview panel being canceled, the terminal device 120 presents an embedded message in the message area of the messaging interface. The embedded message includes at least an access entry of the first expression set in an expression library. Further, in response to a selection of the access entry, display of the expression image in the first expression set may be triggered.

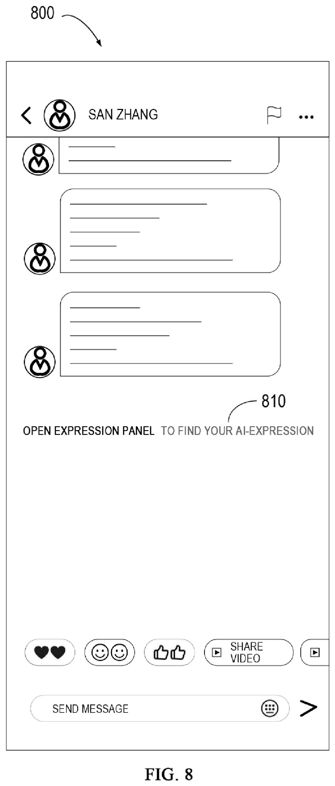

Referring to the example user interface 800 shown in FIG. 8, in the example embodiment of FIG. 8, presentation of the expression preview panel is canceled, and an embedded message 810 is presented in the message area of the messaging interface. The embedded message includes at least an access entry of the first expression set in the expression library. Further, if the user clicks the embedded message, the expression image in the first expression set may be triggered.

As discussed below, according to some embodiments of the present disclosure, when an input of a user is received, an expression image may be recommended to the user. The expression image included in the first expression set is preferentially recommended. Specifically, in some embodiments, in response to receiving a user input in the messaging interface, the terminal device 120 provides a recommendation list of expression images matching with the user input, and if the recommendation list includes a second expression image from the first expression set, the terminal device 120 preferentially displays the second expression image in the recommendation list.

Specifically, the terminal device 120 determines a first number of expression images according to the input of the user. In some embodiments, if the first number is greater than the maximum number that may be presented by the recommendation list, the expression image in the first expression set is preferentially presented in the recommendation list. Further, when the recommendation list is presented, the presentation position of the expression image in the first expression set is pre-posed.

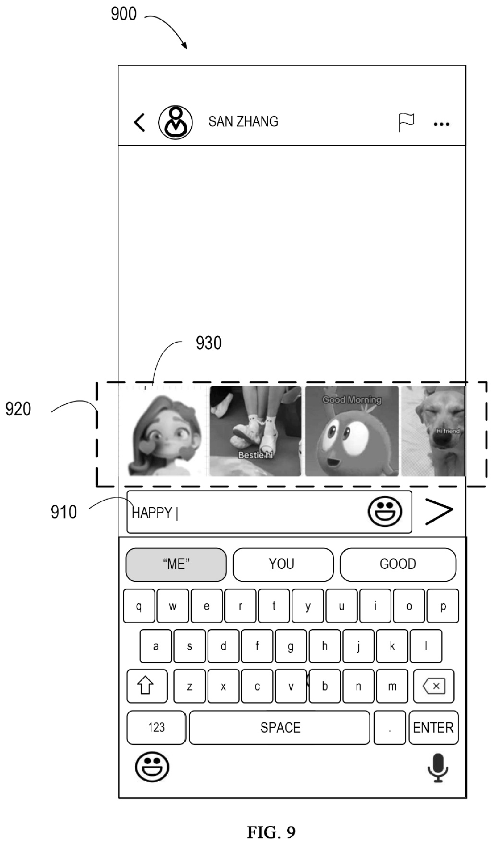

Referring to the example user interface 900 shown in FIG. 9, in the example embodiment of FIG. 9, when the user inputs "happy", the terminal device 120 provides a recommendation list 920 of expression images that match with the user input. As shown in FIG. 9, an expression image 930 included in the first expression set is preferentially displayed in the recommendation list 920, i.e., as the first recommended expression image.

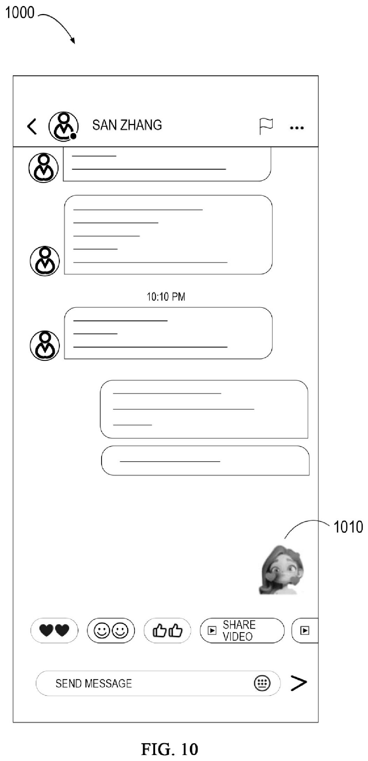

In some embodiments, in response to the expression image in the recommendation list being selected. Referring to the example user interface 1000 shown in FIG. 10, in the example embodiment of FIG. 10, the selected expression image 1010 is presented in the user interface 1000.

In some embodiments, the expression image that has been sent may be withdrawn. In the example embodiment of FIG. 10, if the user long-presses the expression image 1010, the terminal device 120 may present a pop-up window to assist the user in withdrawing the expression image 1010.

As discussed below, according to some embodiments of the present disclosure, when the overall entry of the expression library is triggered, a navigation label of the first expression set may be preferentially displayed. Specifically, in some embodiments, if the trigger operation on the overall entry of the expression library is detected, an expression panel corresponding to the expression library is presented. The expression panel at least includes a list of navigation labels corresponding to the plurality of expression sets respectively, and a navigation label in the expression panel may be selected to enable a corresponding expression set to be displayed in the expression panel. The first navigation label corresponding to the first expression set is preferentially displayed in the list of navigation labels.

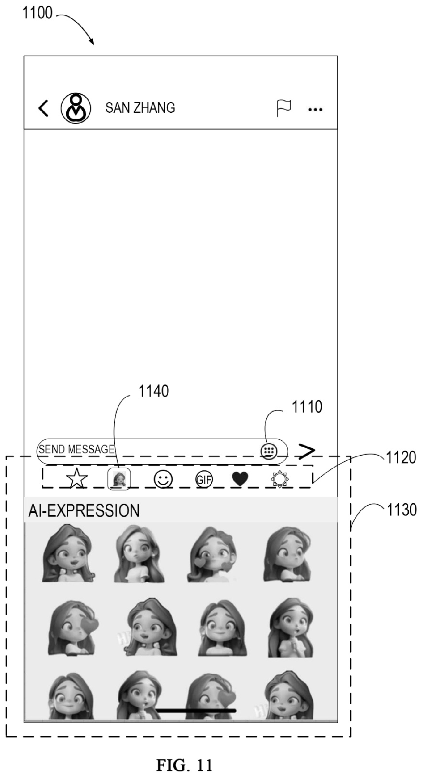

Referring to the example user interface 1100 shown in FIG. 11, in the example embodiment of FIG. 11, when a trigger operation on the overall entry 1110 of the expression library is detected, the terminal device 120 presents an expression panel 1130 corresponding to the expression library. The expression panel 1130 at least includes a list 1120 of navigation labels corresponding to the plurality of expression sets respectively. A navigation label in the expression panel may be selected to enable a corresponding expression set to be displayed in the expression panel. As shown in FIG. 11, a first navigation label 1140 corresponding to the first expression set is preferentially displayed in the list of navigation labels, that is, the first navigation label 1140 is presented as a second navigation label, i.e., immediately follows a navigation label for favoriting an expression.

In some embodiments, in response to detecting that presentation of the expression panel is triggered for the first time after the first expression set is created, the terminal device 120 causes the first navigation label to be selected by default, such that the first expression set is displayed in the expression panel. Referring to the example user interface 1100 shown in FIG. 11, in the example embodiment of FIG. 11, the first navigation label 1140 is selected by default.

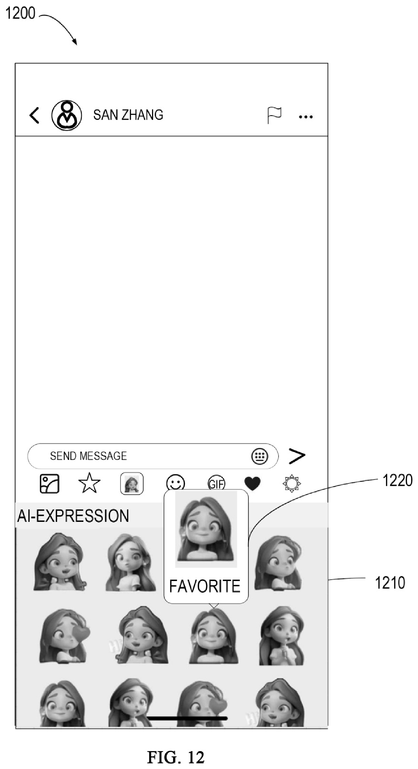

In some embodiments, expression images in the first expression set may be favorited. Referring to the example user interface 1200 shown in FIG. 12, in the example embodiment of FIG. 12, an expression image 1210 in the first expression set may be activated, e.g., by long-press. The terminal device 120 pops up a prompt window 1220. Based on the prompt window 1220, the user may set the expression 1210 as a favorite expression.

As discussed below, in accordance with some embodiments of the present disclosure, the first expression set may be updated, and the updating includes, but is not limited to, replacement, deletion, editing, modification, or the like.

In some embodiments, in response to the first expression set being displayed in the expression panel, the terminal device 120 provides at least one of the following in the expression panel: an expression creation entry configured to trigger generation of an expression image of the first expression type by using the image generation model, and a deletion control for the first expression set.

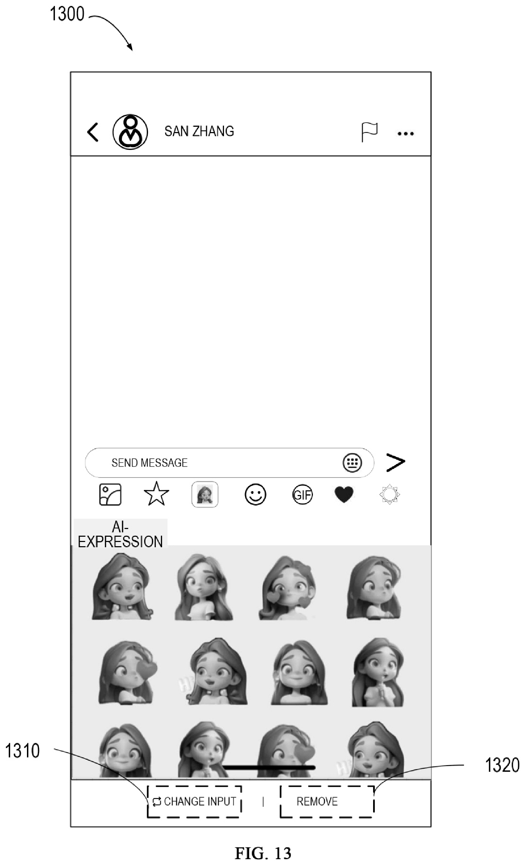

Referring to the example user interface 1300 shown in FIG. 13, in the example embodiment of FIG. 13, in response to the first expression set being displayed in the expression panel, the terminal device 120 provides, in the expression panel, an expression creation entry 1310 configured to trigger generation of an expression image of the first expression type by using the image generation model, and a deletion control 1320 for the first expression set.

In some embodiments, since the first expression set occupies a large storage space, the user is only allowed to create a group of first expression sets. In this case, when the user creates a new first expression set, the existing first expression set will be removed.

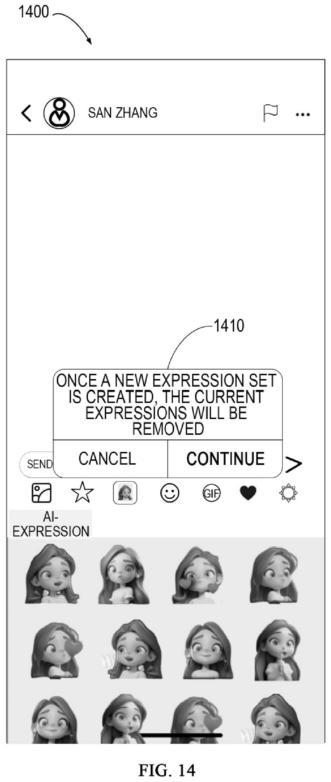

In some embodiments, if the user triggers the expression creation entry 1310 in FIG. 13, a removal operation of the first expression set is activated. As shown in FIG. 14, after the removal operation of the first expression set is activated by the user, the terminal device 120 presents a pop-up window 1410 to prompt the user that the current first expression set will be removed after a new expression set is created. If the user confirms the operation, an operation process of creating the first expression set is activated.

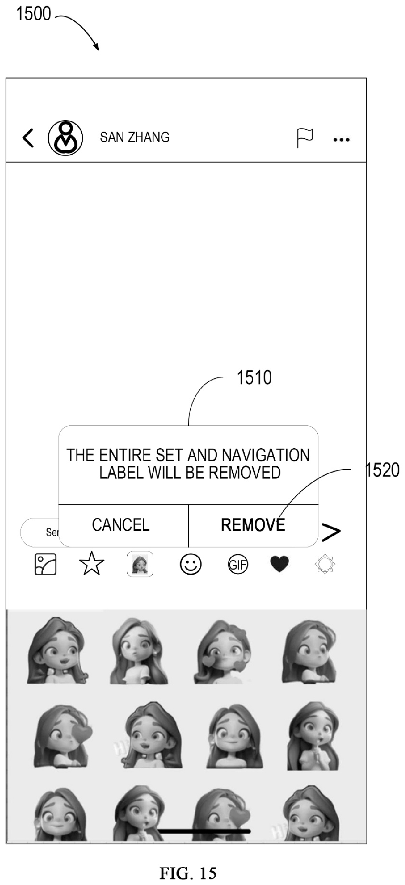

Further referring to FIG. 13, in response to the deletion control 1320 for the first expression set, a deletion operation of the first expression set is activated. As shown in FIG. 15, the terminal device 120 presents a pop-up window 1510 to prompt the user that an operation of deleting/removing the first expression set is currently being performed.

In some embodiments, in order to avoid improper removal caused by misoperation of the user, the user is required to confirm again before removing the first expression set from the system. If the user confirms to remove the first expression set, such as clicking on a removal control 1520 in FIG. 15, the first expression set is removed.

In some embodiments, the expression creation entry 1310 is presented only when a predetermined presentation condition is satisfied. As an example implementation, the expression creation entry 1310 is presented only if a creation process of the first expression set is not performed within a predetermined period of time, such as a day, 1 hour, etc.

As discussed below, in accordance with some embodiments of the present disclosure, the expressions in the first expression set may be posted in any other user interface that supports posting expressions other than the messaging interface. Next, a comment reply interface will be discussed as an example.

In some embodiments, in response to detecting presentation of the comment reply interface for a work, the terminal device 120 displays at least the first expression set in the comment reply interface.

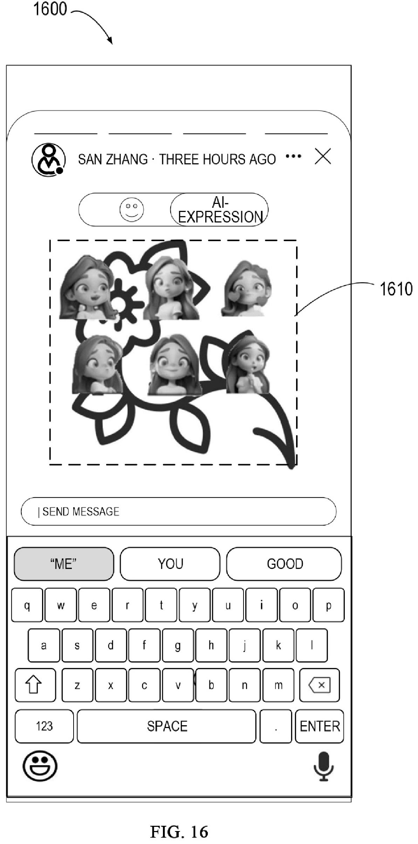

Referring to the example user interface 1600 shown in FIG. 16, in the example embodiment of FIG. 16, the work posted by the user is presented, and at least the first expression set 1610 is displayed in the comment reply interface.

Operations for such as how to present the navigation label of the first expression set on the comment reply interface, how to display the selection of the expression image in the first expression set, how the plurality of expression messages are added to the expression container, and how to trigger the presentation of the expression viewing panel after the expression image/expression container is triggered are similar to the example processes discussed in connection with FIG. 3-15. For purposes of brevity only, the same or similar contents will not be repeated.

In some embodiments, if a selection of a fourth expression image in the first expression set is detected, the terminal device 120 sends a second message on a further messaging interface of a posting user of the work. The second message includes thumbnail information of the work and the fourth expression image at least partially superimposed and displayed on the thumbnail information.

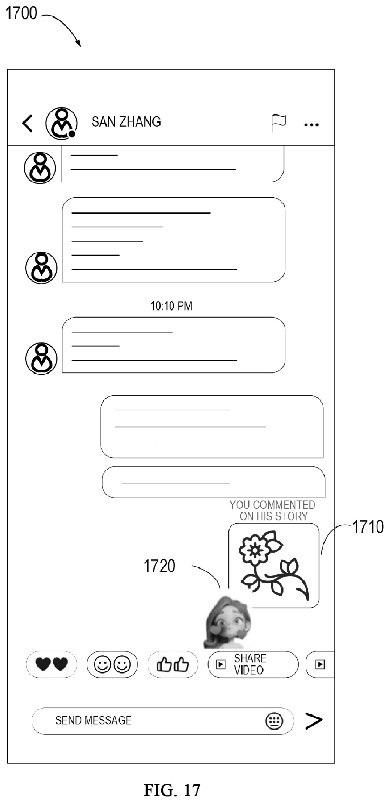

Referring to the example user interface 17 shown in FIG. 17, in the embodiment of FIG. 17, the terminal device 120 sends the second message on a further messaging interface of a posting user of the work. The second message includes thumbnail information 1710 of the work and the fourth expression image 1720 partially superimposed and displayed on the thumbnail information.

In some embodiments, if the user comments a work of other user, the second message may further include, in a further messaging interface, first description information, such as "YOU COMMENTED ON HIS STORY" or the like, in addition to including the thumbnail information of the work and the fourth expression image at least partially superimposed and displayed on the thumbnail information.

Correspondingly, if the work of the user receives comments of other users, the second message may include, in a further messaging interface, second description information, such as "SAN ZHANG COMMENTED ON YOUR STORY", or the like, in addition to including the thumbnail information of the work and the fourth expression image at least partially superimposed and displayed on the thumbnail information.

In some embodiments, if a third expression image of the first expression type sent by a further user is received, the terminal device 120 may provide a message notification to the user. The message notification indicates at least one of the following: a receipt of the first expression type, or a preview of the third expression image.

In some embodiments, the message notification may be a prompt message for an operating system. Alternatively, in some embodiments, the message notification may be a prompt message of an application. In this case, the message notification may be sent to a system message list of the user. The system message list is sometimes also referred to as an inbox or a receiver folder.

In some embodiments, the message notification at least prompts the following information: a poster of a comment and content of the comment use at least an expression image in the first set, for example, San Zhang sends an AI expression.

In some embodiments, the first expression set is only valid for a predetermined period of time after creation. In some embodiments, the first expression set is automatically deleted 24 hours after creation. Additionally, an effective duration of the first expression set may be configured by the user himself. The present disclosure is not limited in this regard.

In some embodiments, even if the first expression set is removed by the user, the expression image in the first expression set that is previously sent by the user may still be displayed normally. In some embodiments, if the account of the user is disabled, the expression picture in the first expression set that has been sent by the user will not be normally displayed, for example, replaced with a default expression or text pre-configured by the system.

In summary, according to various embodiments of the present disclosure, a solution for expression usage is provided. According to the solution of the present disclosure, after the AI-expression is created, the user may use the AI-expression in an interface such as a messaging interface and a comment reply interface. Since the AI expression may include richer information, the interaction process between users becomes more interesting, thereby effectively improving the user experience.

### Example Method

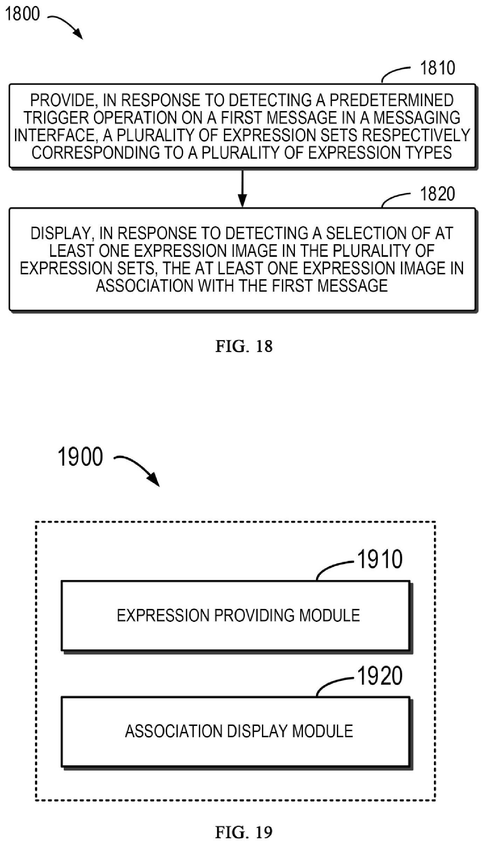

FIG. 18 illustrates a flowchart of a method 1800 for content presentation according to some embodiments of the present disclosure. The method 1800 may be implemented at the terminal device 120. The method 1800 is described below with reference to FIG. 1.

At block 1810, in response to detecting a predetermined trigger operation on a first message in a messaging interface, the terminal device 120 provides a plurality of expression sets respectively corresponding to a plurality of expression types. The plurality of expression sets including at least a first expression set corresponding to a first expression type. The expression image in the first expression set is generated by using an image generation model based on an image input by a user.

At block 1820, in response to detecting a selection of at least one expression image in the plurality of expression sets, the terminal device 120 displays the at least one expression image in association with the first message. The at least one expression image is at least partially superimposed on the first message.

In some embodiments, in response to detecting a predetermined operation on the first message, the terminal device 120 superimposes and displays an expression bar on a message region of the messaging interface. The expression bar includes at least a first navigation label corresponding to the first expression set and a second navigation label corresponding to a second expression set, and a navigation label in the expression bar is selectable to enable a corresponding expression set to be displayed in the expression bar.

In some embodiments, the first navigation label is selected by default when the expression bar is displayed such that the first expression set is displayed in the expression bar.

In some embodiments, in response to detecting a selection of a plurality of expression images in the plurality of expression sets, the terminal device 120 displays an expression container in association with the first message. The expression container includes respective thumbnails of the plurality of expression images, and the expression container is at least partially superimposed on a display area of the first message.

In some embodiments, the first message has at least one further expression image that has been displayed in association, and in response to detecting the selection of the at least one expression image in the plurality of expression sets, the terminal device 120 displays an expression container in association with the first message. The expression container includes the at least one further expression image and a respective thumbnail of the at least one expression image, and the expression container is at least partially superimposed on a display area of the first message.

In some embodiments, a predetermined trigger operation includes at least a long-press operation.

In some embodiments, in response to detecting a selection of an expression image displayed in association with the first message, the terminal device 120 presents an expression viewing panel in the messaging interface. The expression viewing panel includes the expression image displayed in association with the first message and a sent user of the expression image.

In some embodiments, the expression viewing panel includes an entry of a user detail page of the sent user of the expression image.

In some embodiments, the at least one expression image selected from the plurality of expression sets includes at least one expression image from the first expression set and at least one expression image from a second expression set of the plurality of expression sets.

In some embodiments, in response to detecting that the messaging interface is presented, the terminal device 120 presents an expression preview panel in a message area of the messaging interface. The expression preview panel includes one or more expression images in the first expression set.

In some embodiments, in response to detecting a selection of at least one expression image in the expression preview panel or in response to detecting a closing operation for the expression preview panel, the terminal device 120 cancels presentation of the expression preview panel, and presents an embedded message in the message area of the messaging interface, the embedded message including at least an access entry of the first expression set in an expression library.

In some embodiments, in response to receiving a user input in the messaging interface, the terminal device 120 provides a recommendation list of expression images matching with the user input, and if the recommendation list includes a second expression image from the first expression set, the terminal device 120 displays the second expression image preferentially in the recommendation list.

In some embodiments, the messaging interface includes an overall entry of an expression library. In response to detecting a trigger operation on the overall entry, the terminal device 120 presents an expression panel corresponding to the expression library. The expression panel includes at least a list of navigation labels corresponding to the plurality of expression sets respectively, and a navigation label in the expression panel is selectable to enable a corresponding expression set to be displayed in the expression panel. A first navigation label corresponding to the first expression set is preferentially displayed in the list of navigation labels.

In some embodiments, in response to detecting that presentation of the expression panel is triggered for the first time after the first expression set is created, the terminal device 120 causes the first navigation label to be selected by default, such that the first expression set is displayed in the expression panel.

In some embodiments, in response to the first expression set being displayed in the expression panel, the terminal device 120 provides at least one of the following in the expression panel: an expression creation entry configured to trigger generation of an expression image of the first expression type by using the image generation model, and a deletion control for the first expression set.

In some embodiments, if a third expression image of the first expression type sent by a further user is received, the terminal device 120 provides a message notification. The message notification indicates at least one of the following: a receipt of the first expression type, or a preview of the third expression image.

In some embodiments, in response to detecting presentation of a comment reply interface for a work, the terminal device 120 displays at least the first expression set in the comment reply interface, and in response to detecting a selection of a fourth expression image in the first expression set, the terminal device 120 sends a second message on a further messaging interface of a posting user of the work. The second message includes thumbnail information of the work and the fourth expression image at least partially superimposed and displayed on the thumbnail information.

### Example Apparatus and Device

FIG. 19 illustrates a schematic structural block diagram of an apparatus 1900 for expression usage according to some embodiments of the present disclosure. The apparatus 1900 may be implemented or included in the terminal device 120. Various modules/components in the apparatus 1900 may be implemented by hardware, software, firmware, or any combination thereof.

As illustrated, the apparatus 1900 includes an expression providing module 1910 configured to provide, in response to detecting a predetermined trigger operation on a first message in a messaging interface, a plurality of expression sets respectively corresponding to a plurality of expression types, the plurality of expression sets including at least a first expression set corresponding to a first expression type, and an expression image in the first expression set being generated by using an image generation model based on an image input by a user; and an association display module 1920 configured to display, in response to detecting a selection of at least one expression image in the plurality of expression sets, the at least one expression image in association with the first message, the at least one expression image being at least partially superimposed on the first message.

In some embodiments, the expression providing module 1910 is further configured to superimpose and display, in response to detecting a predetermined operation on the first message, an expression bar on a message region of the messaging interface. The expression bar includes at least a first navigation label corresponding to the first expression set and a second navigation label corresponding to a second expression set, and a navigation label in the expression bar is selectable to enable a corresponding expression set to be displayed in the expression bar. In some embodiments, the first navigation label is selected by default when the expression bar is displayed, such that the first expression set is displayed in the expression bar.

In some embodiments, the association display module 1920 is further configured to display, in response to detecting a selection of a plurality of expression images in the plurality of expression sets, an expression container in association with the first message. The expression container includes respective thumbnails of the plurality of expression images, and the expression container is at least partially superimposed on a display area of the first message.

In some embodiments, the first message has at least one further expression image that has been displayed in association, and the association display module 1920 is further configured to display, in response to detecting the selection of the at least one expression image in the plurality of expression sets, an expression container in association with the first message. The expression container includes the at least one further expression image and a respective thumbnail of the at least one expression image, and the expression container is at least partially superimposed on a display area of the first message.

In some embodiments, a predetermined trigger operation includes at least a long-press operation.

In some embodiments, the association display module 1920 is further configured to present, in response to detecting a selection of an expression image displayed in association with the first message, an expression viewing panel in the messaging interface. The expression viewing panel includes the expression image displayed in association with the first message and a sent user of the expression image.

In some embodiments, the expression viewing panel includes an entry of a user detail page of the sent user of the expression image.

In some embodiments, the at least one expression image selected from the plurality of expression sets includes at least one expression image from the first expression set and at least one expression image from a second expression set of the plurality of expression sets.

In some embodiments, the apparatus 1900 further includes a preview panel presentation module (not shown) configured to present, in response to detecting that the messaging interface is presented, an expression preview panel in a message area of the messaging interface, the expression preview panel including one or more expression images in the first expression set.

In some embodiments, the apparatus 1900 further includes a preview panel closing module (not shown) configured to, in response to detecting a selection of at least one expression image in the expression preview panel or in response to detecting a closing operation for the expression preview panel, cancel presentation of the expression preview panel, and present an embedded message in the message area of the messaging interface, the embedded message including at least an access entry of the first expression set in an expression library.

In some embodiments, the apparatus 1900 further includes a recommendation list module (not shown) configured to provide, in response to receiving a user input in the messaging interface, a recommendation list of expression images matching with the user input, and display, in accordance with the recommendation list including a second expression image from the first expression set. The terminal device 120 preferentially displays the second expression image in the recommendation list.

In some embodiments, the messaging interface includes an overall entry of an expression library. The apparatus 1900 further includes an expression panel presentation module (not shown) configured to present, in response to detecting a trigger operation on the overall entry, an expression panel corresponding to the expression library. The expression panel includes at least a list of navigation labels corresponding to the plurality of expression sets respectively, and a navigation label in the expression panel is selectable to enable a corresponding expression set to be displayed in the expression panel. A first navigation label corresponding to the first expression set is preferentially displayed in the list of navigation labels.

In some embodiments, the apparatus 1900 further includes a default presentation module (not shown) configured to cause, in response to detecting that presentation of the expression panel is triggered for the first time after the first expression set is created, the first navigation label to be selected by default, such that the first expression set is displayed in the expression panel.

In some embodiments, the apparatus 1900 further includes an expression updating module (not shown) configured to provide, by the terminal device 120, in response to the first expression set being displayed in the expression panel, at least one of the following in the expression panel: an expression creation entry configured to trigger generation of the first expression type by using the image generation model, and a deletion control for the first expression set.

In some embodiments, the apparatus 1900 further includes a message notification module (not shown) configured to provide a message notification by the terminal device 120 in accordance with a third expression image of the first expression type sent by a further user being received. The message notification indicates at least one of the following: a receipt of the first expression type, or a preview of the third expression image.

In some embodiments, the apparatus 1900 further includes a comment module (not shown) configured to display, in response to detecting presentation of a comment reply interface for a work, at least the first expression set in the comment reply interface by the terminal device 120, and send, in response to detecting a selection of a fourth expression image in the first expression set, a second message on a further messaging interface of a posting user of the work by the terminal device 120. The second message includes thumbnail information of the work and the fourth expression image that is at least partially superimposed and displayed on the thumbnail information.

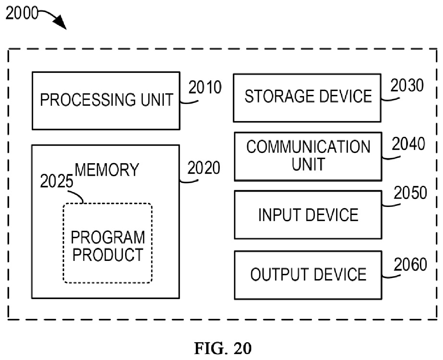

FIG. 20 illustrates a block diagram illustrating an electronic device 2000 in which one or more embodiments of the present disclosure may be implemented. It should be understood that the electronic device 2000 illustrated in FIG. 20 is merely illustrative and should not constitute any limitation on the functionality and scope of the embodiments described herein. The electronic device 2000 shown in FIG. 20 may be configured to implement the terminal device 120 in FIG. 1.

As shown in FIG. 20, the electronic device 2000 is in the form of a general-purpose electronic device. Components of the electronic device 2000 may include, but are not limited to, one or more processors or processing units 2010, a memory 2020, a storage device 2030, one or more communication units 2040, one or more input devices 2050, and one or more output devices 2060. The processing unit 2010 may be an actual or virtual processor and capable of performing various processes according to programs stored in the memory 2020. In multiprocessor systems, a plurality of processing units executes computer-executable instructions in parallel to improve the parallel processing capability of the electronic device 2000.

The electronic device 2000 generally includes a plurality of computer storage media. Such media may be any available media accessible to the electronic device 2000, including, but not limited to, volatile and non-volatile media, removable and non-removable media. The memory 2020 may be a volatile memory (e.g., a register, a cache, a random-access memory (RAM)), a non-volatile memory (e.g., a read-only memory (ROM), an electrically erasable programmable read-only memory (EEPROM), a flash memory), or some combination thereof. The storage device 2030 may be a removable or non-removable medium and may include a machine-readable medium, such as a flash drive, a magnetic disk, or any other medium, which may be capable of storing information and/or data (e.g., training data for training) and may be accessed within the electronic device 2000.

The electronic device 2000 may further include additional removable/non-removable, volatile/non-volatile storage medium/media. Although not shown in FIG. 20, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 2020 may include a computer program product 2025 having one or more program modules configured to perform various methods or actions of various embodiments of the present disclosure.

The communication unit 2040 is configured to communicate with other electronic device(s) through a communication medium. Additionally, the functionality of components of the electronic device 2000 may be implemented in a single computing cluster or a plurality of computing machines capable of communicating through a communication connection. Thus, the electronic device 2000 may operate in a networked environment using logical connections with one or more other servers, a network personal computer (PC), or another network node.

The input device 2050 may be one or more input devices such as a mouse, a keyboard, a trackball, or the like. The output device 2060 may be one or more output devices, such as a display, a speaker, a printer, or the like. The electronic device 2000 may also communicate with one or more external devices (not shown) through the communication unit 2040 as needed, the external device such as a storage device, a display device, etc., communicates with one or more devices that enable a user to interact with the electronic device 2000, or communicates with any device (e.g., a network card, a modem, etc.) that enables the electronic device 2000 to communicate with one or more other electronic devices. Such communication may be performed via an input/output (I/O) interface (not shown).

According to example implementations of the present disclosure, there is provided a computer-readable storage medium having computer-executable instructions stored thereon. The computer-executable instructions are executed by a processor to implement the method described above. According to example implementations of the present disclosure, a computer program product is further provided. The computer program product is tangibly stored on a non-transitory computer-readable medium and includes computer-executable instructions, and the computer-executable instructions are executed by a processor to implement the method described above.

Aspects of the present disclosure are described herein with reference to flowchart(s) and/or block diagram(s) of a method, an apparatus, a device, and a computer program product implemented according to the present disclosure. It should be understood that each block of the flowchart(s) and/or block diagram(s), and combination(s) of blocks in the flowchart(s) and/or block diagram(s), may be implemented by computer readable program instructions.

These computer-readable program instructions may be provided to a processing unit of a general purpose computer, a special purpose computer, or other programmable data processing apparatus to produce a machine, such that the instructions, when executed by a processing unit of a computer or other programmable data processing apparatus, produce apparatuses to implement function(s)/act(s) specified in one or more blocks of the flowchart(s) and/or block diagram(s). These computer-readable program instructions may also be stored in a computer-readable storage medium, and the instructions cause the computer, programmable data processing apparatus, and/or other devices to operate in a particular manner, such that the computer-readable medium storing instructions includes an article of manufacture including instructions to implement aspects of the function(s)/act(s) specified in one or more blocks in the flowchart(s) and/or block diagram(s).

The computer-readable program instructions may be loaded onto a computer, other programmable data processing apparatus, or other apparatus, such that a series of operational steps are performed on the computer, other programmable data processing apparatus, or other apparatus to produce a computer-implemented process such that the instructions executed on the computer, other programmable data processing apparatus, or other apparatus implement the function(s)/act(s) specified in one or more blocks of the flowchart(s) and/or block diagram(s).

The flowchart and block diagrams in the figures show architecture, functionality, and operation of possible implementations of a system, a method, and a computer program product according to various implementations of the present disclosure. In this regard, each block in the flowchart(s) or block diagram(s) may represent a module, program segment, or portion of an instruction that includes one or more executable instructions for implementing the specified logical function. In some alternative implementations, the function noted in the block may also occur in a different order than noted in the figures. For example, two consecutive blocks may actually be performed substantially in parallel, which may sometimes be performed in the reverse order, depending on the functionality involved. It is also noted that each block in the block diagram(s) and/or flowchart(s), as well as combinations of blocks in the block diagram(s) and/or flowchart(s), may be implemented with a dedicated hardware-based system that performs the specified function(s) or action(s), or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for expression usage, comprising:
providing, in response to detecting a predetermined trigger operation on a first message in a messaging interface, a plurality of expression sets respectively corresponding to a plurality of expression types, the plurality of expression sets comprising at least a first expression set corresponding to a first expression type, and an expression image in the first expression set being generated by using an image generation model based on an image input by a user; and
displaying, in response to detecting a selection of at least one expression image in the plurality of expression sets, the at least one expression image in association with the first message, the at least one expression image being at least partially superimposed on the first message.

2. The method of claim 1, wherein providing the plurality of expression sets that are selectable comprises:
superimposing and displaying, in response to detecting a predetermined operation on the first message, an expression bar on a message area of the messaging interface, the expression bar comprising at least a first navigation label corresponding to the first expression set and a second navigation label corresponding to a second expression set, and a navigation label in the expression bar being selectable to enable a corresponding expression set to be displayed in the expression bar.

3. The method of claim 2, wherein the first navigation label is selected by default when the expression bar is displayed such that the first expression set is displayed in the expression bar.

4. The method of claim 1, wherein displaying the at least one expression image in association with the first message comprises:
displaying, in response to detecting a selection of a plurality of expression images in the plurality of expression sets, an expression container in association with the first message, the expression container comprising respective thumbnails of the plurality of expression images, and the expression container being at least partially superimposed on a display area of the first message.

5. The method of claim 1, wherein the first message has at least one further expression image that has been displayed in association, and displaying the at least one expression image in association with the first message comprises:
displaying, in response to detecting the selection of the at least one expression image in the plurality of expression sets, an expression container in association with the first message, the expression container comprising the at least one further expression image and a respective thumbnail of the at least one expression image, and the expression container being at least partially superimposed on a display area of the first message.

6. The method of claim 1, wherein the predetermined trigger operation comprises at least a long-press operation.

7. The method of claim 1, further comprising:
presenting, in response to detecting a selection of an expression image displayed in association with the first message, an expression viewing panel in the messaging interface, the expression viewing panel comprising the expression image displayed in association with the first message and a sent user of the expression image.

8. The method of claim 7, wherein the expression viewing panel comprises an entry of a user detail page of the sent user of the expression image.

9. The method of claim 1, wherein the at least one expression image selected from the plurality of expression sets comprises at least one expression image from the first expression set and at least one expression image from a second expression set of the plurality of expression sets.

10. The method of claim 1, further comprising:
presenting, in response to detecting that the messaging interface is presented, an expression preview panel in a message area of the messaging interface, the expression preview panel comprising one or more expression images in the first expression set.

11. The method of claim 10, further comprising:
in response to detecting a selection of at least one expression image in the expression preview panel or in response to detecting a closing operation for the expression preview panel,
canceling presentation of the expression preview panel; and
presenting an embedded message in the message area of the messaging interface, the embedded message comprising at least an access entry of the first expression set in an expression library.

12. The method of claim 1, further comprising:
providing, in response to receiving a user input in the messaging interface, a recommendation list of expression images matching with the user input; and
displaying, in accordance with the recommendation list comprising a second expression image from the first expression set, the second expression image preferentially in the recommendation list.

13. The method of claim 1, wherein the messaging interface comprises an overall entry of an expression library, and the method further comprises:
presenting, in response to detecting a trigger operation on the overall entry, an expression panel corresponding to the expression library, the expression panel comprising at least a list of navigation labels corresponding to the plurality of expression sets respectively, and a navigation label in the expression panel being selectable to enable a corresponding expression set to be displayed in the expression panel,
wherein a first navigation label corresponding to the first expression set is preferentially displayed in the list of navigation labels.

14. The method of claim 13, further comprising:
causing, in response to detecting that presentation of the expression panel is triggered for the first time after the first expression set is created, the first navigation label to be selected by default, such that the first expression set is displayed in the expression panel.

15. The method of claim 13, further comprising:
providing, in response to the first expression set being displayed in the expression panel, at least one of the following in the expression panel:
an expression creation entry configured to trigger generation of an expression image of the first expression type by using the image generation model, and
a deletion control for the first expression set.

16. The method of claim 1, further comprising:
providing, in accordance with a third expression image of the first expression type sent by a further user being received, a message notification indicating at least one of: receipt of the first expression type, or a preview of the third expression image.

17. The method of claim 1, further comprising:
displaying, in response to detecting presentation of a comment reply interface for a work, at least the first expression set in the comment reply interface; and
sending, in response to detecting a selection of a fourth expression image in the first expression set, a second message on a further messaging interface of a posting user of the work, the second message comprising thumbnail information of the work and the fourth expression image at least partially superimposed and displayed on the thumbnail information.

18. An apparatus for expression usage, comprising:
an expression providing module configured to provide, in response to detecting a predetermined trigger operation on a first message in a messaging interface, a plurality of expression sets respectively corresponding to a plurality of expression types, the plurality of expression sets comprising at least a first expression set corresponding to a first expression type, and an expression image in the first expression set being generated by using an image generation model based on an image input by a user; and
an association display module configured to display, in response to detecting a selection of at least one expression image in the plurality of expression sets, the at least one expression image in association with the first message, the at least one expression image being at least partially superimposed on the first message.

19. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 17.

20. A computer-readable storage medium having a computer program stored thereon, the computer program being executable by a processor to implement the method of any of claims 1 to 17.

21. A computer program product, comprising a computer program, wherein the computer program, when executed by a processor, implements the method of any of claims 1 to 17.
